# EUROPÄISCHE PATENTSCHRIFT

(11) **EP 2 422 214 B1**
(45) Veröffentlichungstag und Bekanntmachung des Hinweises auf die Patenterteilung: **18.12.2013**
(21) Anmeldenummer: 10708963.3
(22) Anmeldetag: 25.02.2010
(51) Int. Cl.: G01S 13/86, G01S 13/93

(54) **SENSORANORDNUNG FÜR FAHRERASSISTENZSYSTEME IN KRAFTFAHRZEUGEN**
SENSOR ASSEMBLY FOR DRIVER ASSISTANCE SYSTEMS IN MOTOR VEHICLES
DISPOSITIF DÉTECTEUR POUR SYSTÈMES D'AIDE À LA CONDUITE DANS DES VÉHICULES À MOTEUR

(30) Priorität: 24.04.2009 DE 102009002626
(43) Veröffentlichungstag der Anmeldung: 29.02.2012
(73) Patentinhaber: Robert Bosch GmbH, 70442 Stuttgart (DE)
(72) Erfinder: KLAR, Michael, 71106 Magstadt (DE); ZELLER, Gerald, 71636 Ludwigsburg (DE); LUCAS, Bernhard, 74354 Besigheim (DE)
(86) Internationale Anmeldenummer: PCT/EP2010/052410
(87) Internationale Veröffentlichungsnummer: WO 2010/121859

(56) Entgegenhaltungen:
- DE-A1-102007 018 470
- US-A1- 2003 201 929

## Beschreibung

### Stand der Technik

Die Erfindung betrifft eine Sensoranordnung für Fahrerassistenzsysteme in Kraftfahrzeugen, mit einem Radarsensor und einer Videokamera, die so in ein gemeinsames Gehäuse integriert sind, daß ihre optischen Achsen parallel zueinander ausgerichtet sind.

Fahrerassistenzsysteme wie beispielsweise Abstandsregelsysteme (ACC; Adaptive Cruise Control) oder Kollisionswarnsysteme (PSS, Predictive Safety Systems) benötigen eine Sensorik zur Erfassung des Verkehrsumfelds, insbesondere zur Ortung von vorausfahrenden Fahrzeugen. Diese Sensorik umfaßt typischerweise einen Radarsensor oder eine Videokamera mit zugehöriger elektronischer Bildauswertung oder auch eine Kombination beider Sensorsysteme. Eine solche Kombination ist besonders zweckmäßig, weil die speziellen Stärken der verschiedenen Sensorsysteme einander ergänzen. So ermöglicht ein Radarsensor generell eine genaue Messung von radialen Abständen und Radialgeschwindigkeiten aber nur eine verhältnismäßig gering aufgelöste Messung von Richtungswinkeln und nur eine grobe Schätzung der Breite der georteten Objekte, während eine Videokamera eine genaue Messung von Richtungswinkeln, Quergeschwindigkeiten und Objektbreiten erlaubt, aber (insbesondere im Fall eines monokularen Systems) nur eine geringe Genauigkeit bei der Messung von radialen Abständen und Geschwindigkeiten bietet.

In DE 10 2007 018 470 A1 wird eine Sensoranordnung beschrieben, die eine Kombination aus einem Radarsensor und einer Videokamera und ein elektronisches Auswertungssystem umfaßt, das die Daten der beiden Sensortypen miteinander fusioniert.

Bei bekannten Sensoranordnungen ist der Radarsensor üblicherweise außen am Fahrzeug angebracht, zumeist im Bereich der vorderen Stoßstange. Die Videokamera ist dagegen typischerweise im Fahrzeuginneren hinter der Windschutzscheibe angeordnet.

US 2003/201929 A1 beschreibt eine Sensoranordnung der eingangs genannten Art, bei der der Radarsensor und die Kamera nebeneinander auf einem plattenförmigen Substrat angeordnet sind, das auch einen Prozessor zur Verarbeitung der Sensordaten trägt.

Aufgabe der Erfindung ist es, eine Sensoranordnung zu schaffen, die sich besonders einfach montieren und justieren läßt.

Diese Aufgabe wird erfindungsgemäß dadurch gelöst, daß eine Radarlinse des Radarsensors und ein Objektiv der Videokamera in einem Gehäusedeckel des Gehäuses gehalten sind, und daß eine Platine, die mit einem Hochfrequenzteil und Antennenelementen des Radarsensors bestückt ist, fest an einer parallel zu dem Gehäusedeckel verlaufenden Trennwand im Inneren des Gehäuses montiert ist.

Der Radarsensor und die Videokamera sollten generell so justiert sein, daß ihre optischen Achsen exakt parallel zueinander verlaufen, beispielsweise genau in Fahrzeuglängsrichtung. Die Integration des Radarsensors und der Videokamera in ein gemeinsames Gehäuse erlaubt es nun, diese Justage der beiden Komponenten relativ zueinander bereits herstellerseitig mit hoher Präzision vorzunehmen. Beim Einbau in das Kraftfahrzeug braucht dann nur noch das Gehäuse an oder in der Fahrzeugkarosserie montiert und relativ zur Karosserie justiert zu werden, wodurch die Montage und Justagevorgänge erheblich vereinfacht werden. Beispielsweise kann die Justage relativ zur Fahrzeugkarosserie in einem geeigneten Prüfstand unter Zuhilfenahme des von der Videokamera selbst aufgenommenen Videobildes erfolgen, womit zugleich auch eine korrekte Justierung des Radarsensors relativ zur Fahrzeugkarosserie erreicht wird.

Das gemeinsame Gehäuse kann beispielsweise wie bisher die Videokamera im Fahrzeuginneren hinter der Windschutzscheibe angebracht werden.

Vorteilhafte Ausgestaltungen und Weiterbildungen der Erfindung sind in den Unteransprüchen angegeben.

In einer besonders vorteilhaften Ausführungsform enthält das gemeinsame Gehäuse elektronische Komponenten für eine gemeinsame Vorauswertung der Daten des Radarsensors und der Videokamera. In diesem Fall kann die Datenfusion bereits auf niedriger Ebene, nämlich auf Sensorebene mit Hilfe der elektronischen Komponenten in dem gemeinsamen Gehäuse erfolgen, wobei die Daten des Radarsensors die Interpretation des Videobildes erleichtern und umgekehrt, so daß der Umfang der aus dem Gehäuse an die übrige Fahrzeugelektronik zu kommunizierenden Daten erheblich reduziert werden kann.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figur 1: eine schematische Frontansicht einer erfindungsgemäßen Sensoranordnung in einem gemeinsamen Gehäuse; und
- Figur 2: einen schematischen Schnitt durch das Gehäuse längs der Linie II-II in Fig. 1.

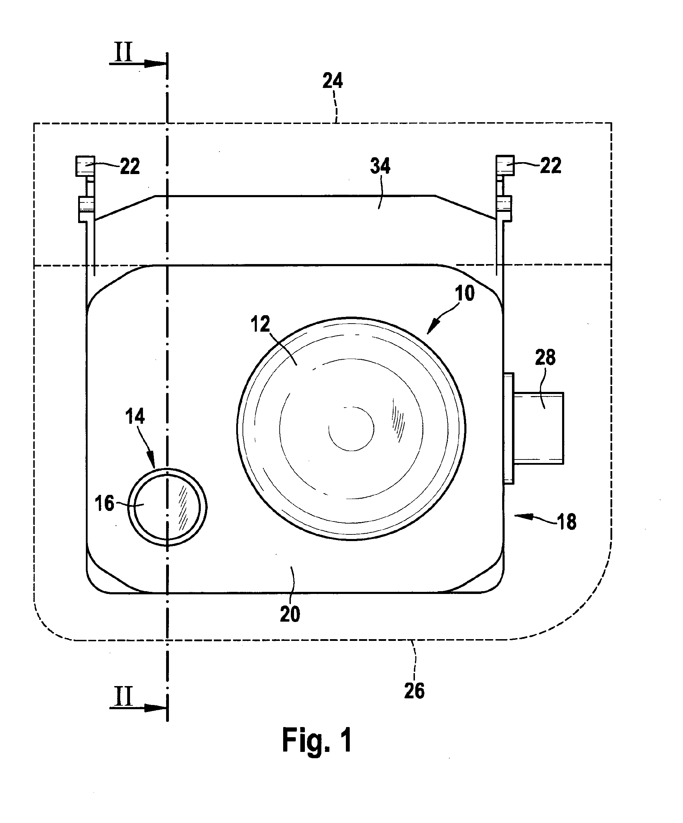

Die in Fig. 1 gezeigte Sensoranordnung umfaßt einen Radarsensor 10, von dem in der Frontansicht nur eine Radarlinse 12 sichtbar ist, und eine Videokamera 14 mit einem Objektiv 16. Der Radarsensor 10 und die Videokamera 14 sind so in einem gemeinsamen Gehäuse 18 angeordnet, daß die Radarlinse 12 und das Objektiv 16 in einem gemeinsamen vorderen Gehäusedeckel 20 gehalten sind.

An der Oberseite des Gehäuses 18 sind Befestigungsansätze 22 angebracht, die im gezeigten Beispiel so gestaltet sind, daß sie eine Rastbefestigung des Gehäuses 18 an einer nur gestrichelt angedeuteten fahrzeugfesten Konsole 24 ermöglichen. An der Konsole 24 ist auch eine Verkleidung 26 montierbar, die das Gehäuse 18 an den übrigen Seiten umschließt und im wesentlichen nur den vorderen Gehäusedeckel 20 mit der Radarlinse 12 und dem Objektiv 16 freiläßt.

Seitlich im Gehäuse 18 ist ein Stecker 28 angebracht, der die Verbindung zwischen der Sensoranordnung und den übrigen elektronischen Komponenten des Fahrzeugs herstellt und der zusammen mit einem nicht gezeigten fahrzeugseitigen Gegenstecker ebenfalls in der Verkleidung 26 aufgenommen ist.

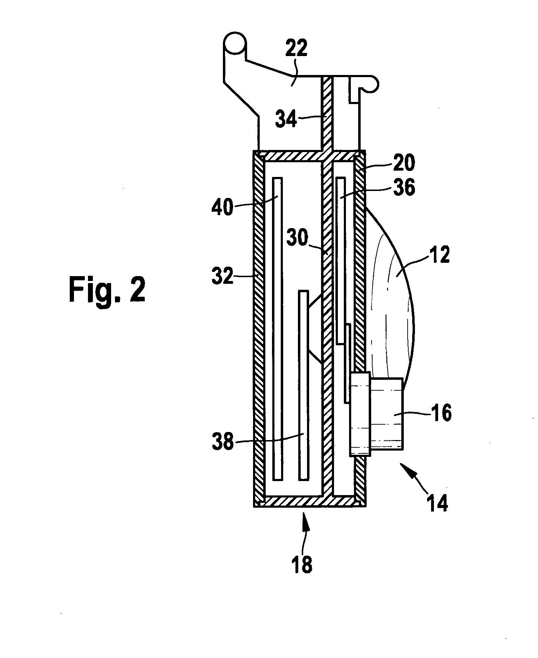

In Fig. 2 ist das Gehäuse 18 im Schnitt dargestellt, so daß man die Radarlinse 12 und das Objektiv 16 der Videokamera in einer Seitenansicht sieht.

Das Gehäuse 10 weist im Inneren eine Trennwand 30 auf, die parallel zu dem vorderen Gehäusedeckel 20 und einem hinteren Gehäusedeckel 32 verläuft und nach oben über die obere Wand des Gehäuses hinaus zu einem Steg 34 verlängert ist, der die beiden Befestigungsansätze 22 verbindet und versteift.

Eine Platine 36 ist mit nicht gezeigten elektronischen Komponenten zur Ansteuerung der Videokamera 14 bestückt und so an der Trennwand 30 befestigt, daß sie in dem Zwischenraum zwischen dieser Trennwand und dem vorderen Gehäusedeckel 20 aufgenommen ist. Eine weitere Platine 38 trägt in bekannter Weise den Hochfrequenzteil und die Antennen des Radarsensors und ist so an der entgegengesetzten Seite der Trennwand 30 befestigt, daß sie in dem Zwischenraum zwischen dieser Trennwand und dem hinteren Gehäusedeckel 32 aufgenommen ist. Die Radarlinse 12 und die Videokamera 16 sind so in dem vorderen Gehäusedeckel 20 gehalten, daß ihre optischen Achsen exakt parallel zueinander ausgerichtet sind. Die beiden Platinen 36 und 38 sind fest an der Trennwand 18 angebracht. Da der vordere Gehäusedeckel 20 seinerseits fest in dem Gehäuse 10 gehalten ist, bleibt dauerhaft eine stabile räumliche Beziehung zwischen der Radarlinse 12 und den Antennen auf der Platine 38 gewährleistet.

In dem Zwischenraum zwischen der Platine 38 und dem hinteren Gehäusedeckel 32 ist in dem Gehäuse 10 eine weitere Platine 40 aufgenommen, die mit elektronischen Komponenten einer gemeinsamen Auswertungselektronik für den Radarsensor 10 und die Videokamera 14 bestückt ist. Diese Auswertungselektronik ist über nicht gezeigte Leitungen mit den Komponenten der Ansteuerungselektronik für die Videokamera 14 und dem Hochfrequenzteil des Radarsensors 10 verbunden und erlaubt eine Fusion und gemeinsame Vorauswertung der Ortungsdaten des Radarsensors und der Videokamera. Im Zuge dieser gemeinsamen Vorauswertung können anhand der vom Radarsensor 10 gelieferten Ortungsdaten und der von der Videokamera 14 gelieferten Bildern einzelne Objekte identifiziert und über mehrere zeitlich aufeinanderfolgende Meßzyklen des Radarsensors hinweg in ihrer zeitlichen Entwicklung verfolgt werden. Dabei liefert der Radarsensor 10 verhältnismäßig genaue Daten über den radialen Abstand und die radiale Geschwindigkeit der georteten Objekte und, da es sich um einen winkelauflösenden Radarsensor handelt, auch Daten über den Richtungswinkel, unter dem die jeweiligen Objekte gesehen werden. Das erlaubt es, die von der Videokamera 14 aufgenommenen Bilder der Objekte mit den vom Radarsensor georteten Objekten zu identifizieren. Durch die Auswertung der Videobilder können dabei die Richtungswinkel der einzelnen Objekte genauer bestimmt werden, und es kann zusätzlich genauere Information über die jeweilige Breite der Objekte gewonnen werden. Letztlich erhält man so in der Vorauswertungsstufe eine fortlaufend aktualisierte Liste aller georteten Objekte einschließlich genauer Daten über deren radiale Abstände und Geschwindigkeiten sowie ihre laterale Position und Breite. Diese Daten werden über den Stecker 28 ausgelesen und über entsprechende nicht gezeigte Datenleitungen an ein nicht gezeigtes elektronisches Datenverarbeitungssystem übermittelt, das an anderer Stelle im Fahrzeug installiert ist. Durch die Vorverarbeitung der Daten innerhalb der Sensoranordnung ist die zu übertragende Datenmenge erheblich reduziert, so daß sich die erforderliche Datenübertragungskapazität problemlos bereitstellen läßt.

Über den Stecker 28 werden der Radarsensor 10 und die Videokamera 14 auch mit Betriebsspannung und mit den nötigen Steuersignalen versorgt.

## Patentansprüche

1. Sensoranordnung für Fahrerassistenzsysteme in Kraftfahrzeugen, mit einem Radarsensor (10) und einer Videokamera (14), die so in ein gemeinsames Gehäuse (18) integriert sind, daß ihre optischen Achsen parallel zueinander ausgerichtet sind, **dadurch gekennzeichnet, daß** eine Radarlinse (12) des Radarsensors (10) und ein Objektiv (16) der Videokamera (14) in einem Gehäusedeckel (20) des Gehäuses (18) gehalten sind, und daß eine Platine (38), die mit einem Hochfrequenzteil und Antennenelementen des Radarsensors (10) bestückt ist, fest an einer parallel zu dem Gehäusedeckel (20) verlaufenden Trennwand (30) im Inneren des Gehäuses (18) montiert ist.

2. Sensoranordnung nach Anspruch 1, **dadurch gekennzeichnet, daß** das Gehäuse (18) eine elektronische Schaltung (40) zur Fusion von Ortungsdaten des Radarsensors (10) und der Videokamera (14) aufnimmt.

## Claims

1. Sensor assembly for driver assistance systems in motor vehicles, having a radar sensor (10) and a video camera (14) which are integrated into a common housing (18) in such a way that their optical axes are oriented parallel to one another, **characterized in that** a radar lens (12) of the radar sensor (10) and a lens (16) of the video camera (14) are secured in a housing cover (20) of the housing (18), and **in that** a printed circuit board (38) which is equipped with a radio frequency part and antenna elements of the radar sensor (10) is securely mounted on a dividing wall (30), running parallel to the housing cover (20) in the interior of the housing (18).

2. Sensor assembly according to Claim 1, **characterized in that** the housing (18) accommodates an electronic circuit (40) for fusing location data of the radar sensor (10) and of the video camera (14).

## Revendications

1. Agencement de capteur pour systèmes d'aide à la conduite dans des véhicules automobiles, comprenant un capteur radar (10) et une caméra vidéo (14) qui sont intégrés dans un boîtier commun (18) de telle sorte que leurs axes optiques soient orientés parallèlement l'un à l'autre, **caractérisé en ce qu'**une lentille radar (12) du capteur radar (10) et un objectif (16) de la caméra vidéo (14) sont maintenus dans un couvercle de boîtier (20) du boîtier (18), et **en ce qu'**une plaque (38), qui est munie d'une partie haute fréquence et d'éléments d'antenne du capteur radar (10), est montée fixement sur une paroi de séparation (30) s'étendant parallèlement au couvercle de boîtier (20) à l'intérieur du boîtier (18).

2. Agencement de capteur selon la revendication 1, **caractérisé en ce que** le boîtier (18) reçoit un circuit électronique (40) pour la fusion de données de localisation du capteur radar (10) et de la caméra vidéo (14).
